# EUROPÄISCHE PATENTANMELDUNG

(11) **EP 4 198 473 A1**
(43) Veröffentlichungstag der Anmeldung: **21.06.2023**
(21) Anmeldenummer: 21214995.9
(22) Anmeldetag: 16.12.2021
(51) Int. Cl.: G01K 7/00

(54) **AUFLADBARES ELEKTRISCHES SPEISENTHERMOMETER UND LADEEINRICHTUNG**

(71) Anmelder: Vorwerk & Co. Interholding GmbH, 42270 Wuppertal (DE)
(72) Erfinder: Stein, Matthias, 45472 Mühlheim an der Ruhr (DE); Schulz, Fabian, 46147 Oberhausen (DE); Serndt, Mirco, 42555 Velbert (DE)
(74) Vertreter: Gille Hrabal Partnerschaftsgesellschaft mbB Patentanwälte

(57) **Zusammenfassung**

Die Erfindung betrifft ein Speisenthermometer mit einem Temperatursensor (7), mit einer aufladbaren Batterie (6), mit einer Spule (11), durch die die Batterie (6) induktiv aufgeladen werden kann. Das Speisenthermometer kann einen länglichen, flüssigkeitsdichten Behälter (1) mit einer Öffnung an einer Stirnseite umfassen, wobei die Öffnung durch eine Kappe (9) flüssigkeitsdicht verschlossen ist. Die Erfindung betrifft außerdem ein Ladegerät für das Speisenthermometer. Das Ladegerät kann eine Küchenmaschine (18) sein.

## Beschreibung

Die Erfindung betrifft ein aufladbares elektrisches Speisenthermometer und eine Ladeeinrichtung.

Eine Speise ist eine Nahrung, die aus ein oder mehreren Lebensmitteln zubereitet wird. Die Zubereitung kann das Erwärmen oder Erhitzen umfassen. Beispiele für Lebensmittel, die durch Erwärmen oder Erhitzen zubereitet werden können, sind Fleisch, Gemüse oder Teig für Backwaren.

Ein Speisenthermometer ist ein Temperaturmessgerät, welches dafür bestimmt und geeignet ist, Temperaturen in einem Nahrungsmittel bzw. Lebensmittel während seiner Zubereitung zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder 220°C.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer kann dafür bestimmt und geeignet sein, in eine Speise hineingestochen zu werden, um eine Temperatur im Inneren der Speise messen zu können. Ein Speisenthermometer kann dafür einen langgestreckten Messfühler mit einem spitzen oder zumindest einem sehr dünnen Ende aufweisen, um den Messfühler auch in relativ feste Nahrung wie Fleisch hineinstechen zu können. Der Messfühler umfasst einen Sensor, mit dem eine Temperatur gemessen werden kann. Ein Speisenthermometer kann ein Griffteil aufweisen, das nicht dafür bestimmt ist, in die Speise hineingesteckt zu werden. Das Griffteil kann von einem Benutzer ergriffen werden, um das Speisenthermometer aus einer Nahrung bzw. Speise wieder herausziehen zu können. Das Griffteil kann ebenfalls einen Sensor umfassen, mit dem eine Temperatur gemessen werden kann. Es kann dann auch die Umgebungstemperatur außerhalb einer Nahrung bzw. Speise gemessen werden.

Ein Speisenthermometer im Sinne der vorliegenden Erfindung ist ein elektrisches Speisenthermometer, wenn es für seinen Betrieb elektrischen Strom benötigt. Ein elektrisches Speisenthermometer kann daher eine Batterie umfassen oder aber an eine externe elektrische Energiequelle angeschlossen werden, um mit elektrischem Strom versorgt zu werden.

Mit der vorliegenden Erfindung wird das Ziel verfolgt, die Batterie eines elektrischen Speisenthermometers komfortabel aufladen zu können.

Zur Lösung der Aufgabe dient ein Speisenthermometer mit einem Temperatursensor, mit einer aufladbaren Batterie und mit einer Spule, durch die die Batterie induktiv aufgeladen werden kann.

Eine Batterie ist ein Speicher für elektrische Energie. Der Speicher kann auf elektrochemische Weise elektrische Energie speichern.

Eine Spule ist ein gewickelter elektrischer Leiter. Der elektrische Leiter kann in nur einer Ebene spiralförmig gewickelt sein. Die Spule ist dann sehr flach gebaut, um vorteilhaft mit geringem Bauraum auskommen zu können. Eine sehr flache Bauweise kann aber auch dadurch realisiert sein, dass der elektrische Leiter in nicht mehr als fünf übereinander liegenden Ebenen oder nicht mehr als drei übereinander liegenden Ebenen verläuft.

Die Batterie kann durch die Spule und elektromagnetische Induktion aufgeladen werden, also durch das Entstehen eines elektrischen Feldes bei der Spule aufgrund einer Änderung eines magnetischen Flusses. Das elektrische Feld wird durch eine andere Spule erzeugt, die daher auch Sendespule genannt wird.

Das Speisenthermometer kann einen länglichen bzw. langgestreckten, flüssigkeitsdichten Behälter umfassen. Der Behälter ist also um ein Mehrfaches länger als hoch und breit. Der Behälter kann wenigstens dreimal oder wenigstens fünfmal so lang sein wie hoch oder breit.

Damit der Behälter besonders zuverlässig flüssigkeitsdicht ist, ist dieser vorzugsweise einstückig gefertigt. Es sind also nicht zunächst mehrere Teile getrennt voneinander gefertigt und anschließend zum Behälter zusammengefügt worden.

Die Öffnung des Behälters befindet sich an einer Stirnseite. Die Öffnung ist durch eine Kappe flüssigkeitsdicht verschlossen.

Damit die Kappe besonders zuverlässig flüssigkeitsdicht ist, ist diese vorzugsweise einstückig gefertigt. Es sind also nicht zunächst mehrere Teile getrennt voneinander gefertigt und anschließend zur Kappe zusammengefügt worden.

Die Kappe ist mit dem Behälter vorzugsweise stoffschlüssig und/oder kraftschlüssig verbunden.

Ein Außendurchmesser der Kappe kann mit Druck an einem Innendurchmesser des Behälters anliegen. Es gibt dann eine Presspassung zwischen der Kappe und dem Behälter. Umgekehrt kann ein Innendurchmesser der Kappe mit Druck an einem Außendurchmesser des Behälters anliegen. Dies ist aber weniger zu bevorzugen, da das Material des Behälters in der Regel mechanisch stabiler als das Material der Kappe ist. In beiden Fällen ist die Kappe kraftschlüssig mit dem Behälter verbunden. Eine besonders dichte Verbindung kann so zuverlässig und langlebig erreicht werden.

Ein Außendurchmesser der Kappe kann mit einem Innendurchmesser des Behälters verklebt sein. Umgekehrt kann ein Innendurchmesser der Kappe mit einem Außendurchmesser des Behälters verklebt sein. Es liegt in beiden Fällen eine stoffschlüssige Verbindung vor. Es kann so eine besonders zuverlässige und langlebige dichte Verbindung zwischen der Kappe und dem Behälter erreicht werden.

Die Spule ist vorteilhaft beim Grund der Kappe angeordnet. Die Spule kann dann besonders unproblematisch mit einer anderen Spule induktiv für ein Aufladen der Batterie des Speisenthermometers gekoppelt werden.

Der Behälter besteht vorzugsweise aus Metall. Als Metall ist Aluminium besonders gut geeignet, weil Aluminium ein guter Wärmeleiter und oxidationsbeständig ist. Als Metall kann aber auch ein nicht rostender Edelstahl vorgesehen sein.

Die Kappe besteht vorzugsweise aus einem Kunststoff, der vorzugsweise bis 200°C oder 220°C wärmebeständig ist. Die Kappe kann dann aufgrund der geringen Wärmekapazität und der relativ geringen Wärmeleitfähigkeit besonders gut als Griff verwendet werden.

Das Speisenthermometer kann ein spitzes Ende, also eine Spitze an einer Stirnseite, aufweisen. Das Speisenthermometer kann dann besonders leicht in eine Speise hineingesteckt werden.

Die Batterie kann beim spitzen Ende angeordnet sein. Dadurch ist die Batterie während der Zubereitung einer Speise besonders gut vor übermäßiger Wärme geschützt, wenn die Spitze des Speisenthermometers in eine Speise hineingesteckt ist.

Beim spitzen Ende des Speisenthermometers ist vorzugsweise ein Temperatursensor vorhanden. Es kann dann vorteilhaft die Temperatur im Inneren einer Speise gemessen werden, um eine Speise optimiert herstellen zu können.

Vorzugsweise ist in der Hälfte des Speisenthermometers ein Temperatursensor vorhanden, die dem spitzen Ende gegenüberliegt. Es kann dann alternativ oder ergänzend auch die Umgebungstemperatur außerhalb einer Speise gemessen werden. Weiter verbessert kann dann eine Speise optimiert zubereitet werden, wenn sowohl die Temperatur im Inneren einer Speise als auch die Umgebungstemperatur außerhalb der Speise gemessen werden kann.

Die Spule kann über einen elektrischen Leiter mit einem AC/DC Wandler verbunden sein. Die Batterie kann mit einem elektrischen Leiter mit dem AC/DC Wandler verbunden sein. Der AC/DC Wandler ist ein Bauteil, das Wechselstrom in Gleichstrom umwandelt. Die Batterie kann dann mit Gleichstrom aufgeladen werden. Der AC/DC Wandler ist grundsätzlich zwischen der Spule und der Batterie angeordnet, um den Bauraum minimieren zu können.

Die Erfindung betrifft auch ein Ladegerät für das Speisenthermometer. Das Ladegerät umfasst eine Spule für ein induktives Aufladen des Speisenthermometers. Das Ladegerät umfasst eine langgestreckte Aufnahme für ein Aufnehmen und Aufladen des Speisenthermometers. Alternativ oder ergänzend umfasst das Ladegerät eine Halterung, die das Speisenthermometer für ein Aufladen halten kann. Insbesondere kann das Thermometer in die Halterung eingehängt oder magnetisch gehalten werden.

Mit langgestreckter Aufnahme ist ein Raum gemeint, der dafür bestimmt und geeignet ist, darin das Speisenthermometer aufzubewahren. Die Aufnahme wird durch Wände begrenzt. Die Aufnahme umfasst eine Öffnung, durch die hindurch das Speisenthermometer in die Aufnahme hineingelegt werden kann. Befindet sich das Speisenthermometer im Raum, so kann das Speisenthermometer nicht versehentlich seitlich aus der Aufnahme herausfallen. Die Aufnahme ist langgestreckt und daher länger als breit und hoch. Länge, Breite und Höhe der Aufnahme entsprechen grundsätzlich der Länge, Breite und Höhe des Speisenthermometers. Das Speisenthermometer kann sich innerhalb der Aufnahme daher kaum bewegen. Mit "kaum bewegen" ist gemeint, dass sich das Speisenthermometer maximal wenige Millimeter, so zum Beispiel nicht mehr als 5 mm weit, bewegen kann. Die Aufnahme kann durch eine Ausnehmung in einem Küchengerät realisiert sein.

Mit Halterung ist eine Einrichtung gemeint, die das Speisenthermometer halten kann, ohne dafür einen Raum durch Wände begrenzen zu müssen, die ähnlich lang sind wie das Speisenthermometer. Die Dimensionen einer Halterung können daher vorteilhaft um ein Vielfaches kleiner als die Dimensionen des Speisenthermometers sein. Insbesondere kann das Speisenthermometer in die dann mechanisch wirkende Halterung eingehängt werden und verbleibt dann aufgrund von Schwerkraft in der Halterung. Um dies besonders zuverlässig erreichen zu können, hält die mechanisch wirkende Halterung bevorzugt den als Griff dienenden Bereich des Speisenthermometers. Die Halterung umgreift dann beispielsweise den als Griff dienenden Bereich, so zum Beispiel die vorgenannte Kappe, aber nicht einen anderen Bereich des Speisenthermometers. Von der Halterung steht das durch die Halterung gehaltene Speisenthermometer grundsätzlich in Richtung Untergrund ab.

Die Halterung kann alternativ eine magnetische Halterung sein, die das Thermometer mittelbar oder unmittelbar magnetisch halten kann.

Vorzugsweise kann das Speisenthermometer nur so von der Aufnahme aufgenommen oder nur so von der Halterung gehalten werden, dass die Batterie des Speisenthermometers aufgeladen werden kann. Es wird also durch die Form von Speisenthermometer und durch die Form der daran angepassten Aufnahme bzw. Halterung erreicht, dass das Speisenthermometer in definierter Weise aufgenommen bzw. gehalten wird. Es wird so vermieden, dass das Speisenthermometer so in die Aufnahme gebracht werden kann oder so durch die Halterung gehalten werden kann, dass die Batterie des Speisenthermometers nicht geladen werden kann.

Das Ladegerät kann eine Ladeschale mit einem langgestreckten Behälter sein. Die Ladeschale hat dann die Form eines relativ flachen, langgestreckten Behälters, der nach oben offen ist. Es kann einen Deckel für die Ladeschale geben.

Alternativ kann das Ladegerät langgestreckt und rohrförmig sein, wobei ein Ende des Rohres verschlossen und das gegenüberliegende Ende offen ist. Für das offene Ende kann es einen Verschluss geben. Zu bevorzugen ist allerdings die Ladeschale. In die Ladeschale kann das Speisenthermometer schneller hineingelegt und schneller herausgenommen werden.

Die Ladeschale kann eine Spule in einer Stirnseite des langgestreckten Behälters für ein Aufladen des Speisenthermometers umfassen. Dann kann eine Spule des Speisenthermometers an einem Stirnende angeordnet sein, was besonders vorteilhaft ist, um ein dichtes, induktiv aufladbares Speisenthermometer mit geringem Bauraum erhalten zu können.

Die Ladeschale kann eine Batterie für ein Aufladen des Speisenthermometers umfassen. Die Ladeschale kann dann vorrübergehend auch unabhängig von einer externen Stromquelle genutzt werden.

Die Ladeschale kann eine Spule für ein induktives Aufladen der Batterie der Ladeschale umfassen. Die Spule kann im Grund des Behälters der Ladeschale angeordnet sein, damit konventionelle induktive Ladegeräte wie zum Beispiel induktive Lademappen für ein Aufladen der Batterie des Ladegeräts genutzt werden können.

Das Ladegerät kann ein Küchengerät sein, so zum Beispiel eine Küchenmaschine. Ein Küchengerät ist ein Gerät, welches dazu bestimmt und geeignet ist, eine Speise zuzubereiten. Ein solches Küchengerät übernimmt dann zusätzlich die Funktion des Ladens der Batterie des Speisenthermometers. Es wird so der Platzbedarf für ein Ladegerät minimiert. Eine Küchenmaschine umfasst ein Standteil, ein in das Standteil einsetzbares Gefäß, ein Misch- und/oder Schneidwerkzeug für ein Mischen und/oder Zerkleinern einer Speise im Gefäß und einen Motor als Antrieb für das Misch- und/oder Schneidwerkzeug. Das Küchengerät kann das Speisenthermometer mittelbar oder unmittelbar aufladen. Das Küchengerät kann beispielsweise eine Ausnehmung für ein batteriebetriebenes Ladegerät oder für das Speisenthermometer umfassen. Wird das Ladegerät, so zum Beispiel eine Ladeschale, in die Ausnehmung eingesetzt, dann wird durch elektrische Kontakte oder durch eine Spule in dem Küchengerät die Batterie des Ladegeräts geladen. Das Ladegerät kann dann ein induktiv verbundenes Speisenthermometer aufladen. Auf diese Weise kann das Küchengerät das Speisenthermometer mittelbar aufladen. Das batteriebetriebene Ladegerät kann die genannte Ladeschale sein.

Die Ausnehmung in dem Küchengerät kann in einer Seitenwand des Küchengeräts vorhanden sein, um besonders gut vor Verunreinigungen zu schützen. Die Ausnehmung kann auf einer Oberseite des Küchengeräts vorhanden sein, damit das Speisenthermometer besonders leicht ergriffen werden kann.

Das Küchengerät kann beispielsweise ein Backofen, eine Mikrowelle, eine Kaffeemaschine oder eine Mikrowelle sein.

Die Erfindung betrifft auch eine Küchenmaschine mit einer Halterung für das Speisenthermometer und/oder eine Ausnehmung für ein Ladegerät oder für das Speisenthermometer, um so ein Speisenthermometer geeignet lagern zu können. Die Küchenmaschine dient dann nur der Lagerung, nicht aber einem Aufladen der Batterie des Speisenthermometers.

Nachfolgend wird die Erfindung anhand von Figuren näher erläutert.

Es zeigen:
- Figur 1:: Querschnitt durch ein Thermometervorderteil;
- Figur 2:: Querschnitt durch eine Thermometerkappe;
- Figur 3:: Aufsicht auf Thermometerkappe;
- Figur 4:: Querschnitt durch Speisenthermometer;
- Figur 5:: Aufsicht auf Ladeschale;
- Figur 6:: Querschnitt durch Ladeschale;
- Figur 7:: Küchenmaschine mit Thermometerhalterung;
- Figur 8:: Aufsicht auf Thermometerhalterung;
- Figur 9:: Küchenmaschine mit Ausnehmung für Speisenthermometer;
- Figur 10:: Küchenmaschine mit Ausnehmung für Speisenthermometer;
- Figur 11:: Küchenmaschine mit Ausnehmung für Ladeschale;
- Figur 12:: Küchenmaschine mit seitlicher Ausnehmung für Ladeschale;
- Figur 13:: Küchenmaschine mit magnetischer Halterung.

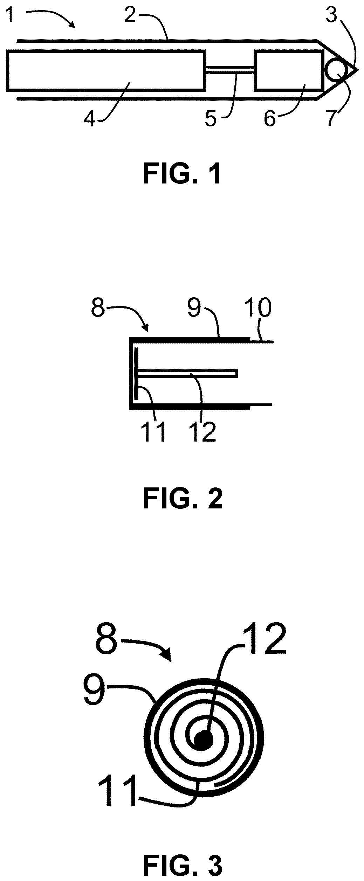

Die Figur 1 zeigt ein Vorderteil 1 eines Speisenthermometers. Das Vorderteil 1 wird im Querschnitt dargestellt. Das Vorderteil 1 umfasst einen rohrförmigen Abschnitt 2, der an einem Ende durch eine Spitze 3 fest verschlossen ist. Der rohrförmige Abschnitt 2 und die Spitze 3 können aus einem Stück hergestellt worden sein, um eine dichte Verbindung zwischen dem rohrförmigen Abschnitt 2 und der Spitze 3 zu gewährleisten. Es ist aber auch möglich, dass der rohrförmige Abschnitt 2 und die Spitze 3 zunächst separat hergestellt worden sind. Anschließend kann der rohrförmige Abschnitt 2 mit der Spitze 2 stoffschlüssig verbunden worden sein. Das Vorderteil 1 ist also ein länglicher, dichter Behälter mit einer Öffnung an einer Stirnseite.

Der rohrförmige Abschnitt 2 und die Spitze 3 können aus einem gut wärmeleitenden Material wie zum Beispiel Metall bestehen. Der rohrförmige Abschnitt 2 und die Spitze 3 können im Fall von Metall im Anschluss an ihre Herstellung durch Schweißen oder Löten verbunden worden sein. Der rohrförmige Abschnitt 2 und die Spitze 3 können beispielsweise aus einer Keramik bestehen.

Innerhalb des rohrförmigen Abschnitts 2 befindet sich eine Leiterplatte 4, die über eine elektrische Leitung 5 mit einer aufladbaren Batterie 6 verbunden ist. Die Leiterplatte 4 kann mit einer Funkeinheit bestückt sein, um gemessene Temperaturen drahtlos versenden zu können. Die Leiterplatte kann mit einem AC/DC Wandler bestückt sein, der Wechselstrom in Gleichstrom umwandelt. Die Leiterplatte 4 kann mit einem integrierten Schaltkreis oder mit einem Mikrocontroller bestückt sein, der den Betrieb des Speisenthermometers steuern kann.

Im Inneren der Speise herrschen während ihrer Herstellung durch Wärmezufuhr in der Regel tiefere Temperaturen als außerhalb der Speise. Die Batterie 6 befindet sich bei der Spitze 3, um während des Betriebs vor Wärme geschützt zu werden. Die Batterie 6 wird vor Wärme geschützt, weil die Spitze 3 dafür bestimmt und geeignet ist, in eine Speise hineingesteckt zu werden.

Im Inneren des Vorderteils gibt es zumindest einen Temperatursensor 7, der elektrisch leitend mit der Leiterplatte 4 verbunden ist. Der Temperatursensor 7 kann sich zweckmäßigerweise innerhalb der Spitze 3 befinden. Es ist dann sichergestellt, dass die Temperatur im Inneren einer Speise während ihrer Herstellung gemessen werden kann.

In der Figur 2 wird ein Endstück 8 des Speisenthermometers im Querschnitt gezeigt. Das Endstück 8 umfasst eine Kappe 9. Die Außendurchmesser 10 der Kappe 9 ist bei der Öffnung der Kappe 9 reduziert. Dies kann durch eine reduzierte Wandstärke erreicht worden sein. Das Material der Kappe 9 besteht vorzugsweise aus einem schlecht wärmeleitenden Material wie zum Beispiel Kunststoff. Das Material der Kappe 9 besteht vorzugsweise aus einem nicht metallischen Material, um eine elektromagnetische Abschirmung zu vermeiden. Auch deshalb ist Kunststoff ein geeignetes Material. Das Endstück 8 ist dann besonders geeignet, um als Griff benutzt zu werden. Das Material der Kappe 9 kann beispielsweise aus Polyetheretherketon (PEEK) bestehen. Alternativ ist ein keramisches Material möglich.

Es können auch ein oder mehrere weitere Temperatursensoren vorhanden sein, um Temperaturen innerhalb und außerhalb einer Speise messen zu können. Zumindest ein Temperatursensor ist daher vorzugsweise in der oberen Hälfte des Speisenthermometers angeordnet, die der Spitze 3 gegenüberliegt.

Im Grund der Kappe 8 ist eine Spule 11 vorhanden. Die Spule 11 ist mit einem elektrischen Leiter 12 verbunden.

Die Figur 3 zeigt eine Aufsicht auf das Endstück 8 in die Kappe 9 hinein. Zu sehen ist daher die Spule 11 und der elektrische Leiter 12. Es ist zu erkennen, dass der elektrische Leiter 12 in das Zentrum der Wicklung der Spule 11 einmündet. Die Spule 11 kann auf dem Grund der Kappe 9 aufgeklebt worden sein. Die Spule 11 kann in das Material der Kappe 9 eingelassen worden sein. Die Spule 11 kann auf einem nicht metallischen Träger aufgebracht sein, um eine elektromagnetische Abschirmung zu vermeiden.

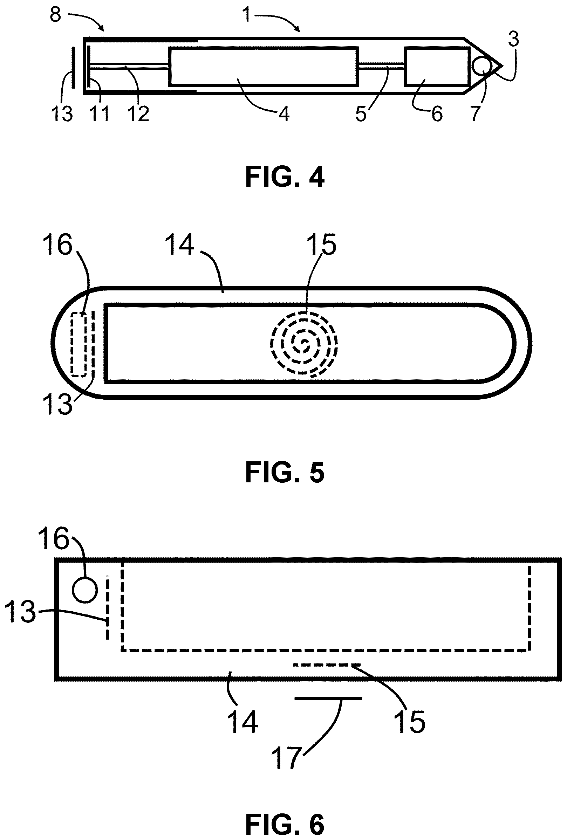

Das Endstück 8 dient als Verschluss für das Vorderteil 1. In einem ersten Schritt wird für das Verschließen des Vorderteils 1 der elektrische Leiter 12 mit der Leiterplatte 4 geeignet verbunden und zwar in der Regel durch Löten. Beispielsweise eine Klemmverbindung ist alternativ möglich. Dank des reduzierten Durchmessers 10 kann dieser Bereich des Endstücks 8 in den rohrförmigen Abschnitt 2 hineingeschoben werden, was im Anschluss an den ersten Schritt geschieht. Außerdem wird der Bereich des reduzierten Durchmessers 10 durch Klemmwirkung und/oder Verkleben fest und dicht mit dem rohrförmigen Abschnitt 2 verbunden. Vorzugsweise gibt es daher zwischen dem reduzierten Durchmesser 10 und dem Innendurchmesser des rohrförmigen Abschnitts 2 eine Presspassung, um eine besonders dichte Verbindung sicherzustellen. Zumindest handelt es sich vorzugsweise um eine Übergangspassung. Im Anschluss daran ist die Endmontage beendet und es liegt das in der Figur 4 im Querschnitt gezeigte Speisenthermometer vor. Da die Spule 11 als Empfängerspule dient, kann die Batterie 6 des Speisenthermometers durch eine externe Sendespule 13 induktiv aufgeladen werden. Induzierter elektrischer Strom wird von der Empfangsspule 11 über den elektrischen Leiter 12 an den AC/DC Wandler weitergeleitet. Elektrischer Gleichstrom wird dann an die Batterie 6 über den elektrischen Leiter 5 geleitet. Die Batterie 6 kann so aufgeladen werden.

Die als Empfänger dienende Spule 11 muss nicht zwingend im oder beim Grund der Kappe 9 angeordnet sein. Diese kann auch anders so angeordnet werden, dass ein induktiver Kontakt mit einer Sendespule 13 möglich ist. Die Anordnung im Grund der Kappe 11 ist allerdings besonders vorteilhaft, da sich dadurch wichtige Eigenschaften des Speisenthermometers realisieren lassen: Die Spule 11 ist induktiv sehr gut und zuverlässig erreichbar. Es kann dann mit hohem Wirkungsgrad aufgeladen werden. Es kann ein sehr dichtes Gehäuse geschaffen werden, um das Innere des Speisenthermometers vor schädlichen äußeren Einflüssen, wie diese während der Zubereitung einer Speise auftreten können, sehr gut schützen zu können.

Um das Speisenthermometer aufladen zu können, kann eine Ladeschale vorhanden sein. Ein Beispiel für eine Ladeschale wird in der Figur 5 in einer Aufsicht in die Ladeschale hinein und in der Figur 6 im Querschnitt gezeigt. Die Ladeschale umfasst einen Behälter 14 mit einem langgestreckten Innenraum, der also lange Seiten und im Vergleich dazu kurze Seiten aufweist. Der Innenraum des Behälters 14 ist so dimensioniert, dass das Speisenthermometer in den Behälter 14 hineingelegt werden kann. Vorzugsweise ist der Innenraum des Behälters 14 so an die Form des Speisenthermometers angepasst, dass das Speisenthermometer nur in einer vorgegebenen Richtung in den Innenraum hineingelegt werden kann. Die vorgegebene Richtung ist dann so, dass eine stirnseitig angeordnete Sendespule 13 der Ladeschale benachbart zur Empfängerspule 11 des Speisenthermometers liegt. Beispielsweise in dieser Stirnseite kann eine aufladbare Batterie 16 vorhanden sein, über die elektrische Energie für ein Aufladen des Speisenthermometers bereitgestellt werden kann. Ist die Spule 11 im Grund der Kappe 9 in einer Ebene parallel zum Grund angeordnet, so ist für ein Aufladen des Speisenthermometers nicht auf eine besondere Rotationsrichtung zu achten.

Vorzugsweise im Grund der Ladeschale kann eine Spule 15 vorhanden sein, über die die Batterie 16 der Ladeschale aufgeladen werden kann. Bei dieser Ausgestaltung können konventionelle induktive Ladegeräte mit einer Sendespule 17 genutzt werden, um die Batterie 16 aufzuladen. Die Ladeschale kann einen AC/DC Wandler umfassen, um induzierten Wechselstrom zunächst in Gleichstrom umzuwandeln. Mithilfe des Gleichstroms kann dann die Batterie 16 aufgeladen werden.

Der Behälter 14 der Ladeschale kann wie der Innenraum langestreckt sein. Der Behälter 14 weist dann gegenüberliegende lange Seiten auf und im Verhältnis dazu gegenüberliegende kurze Seiten.

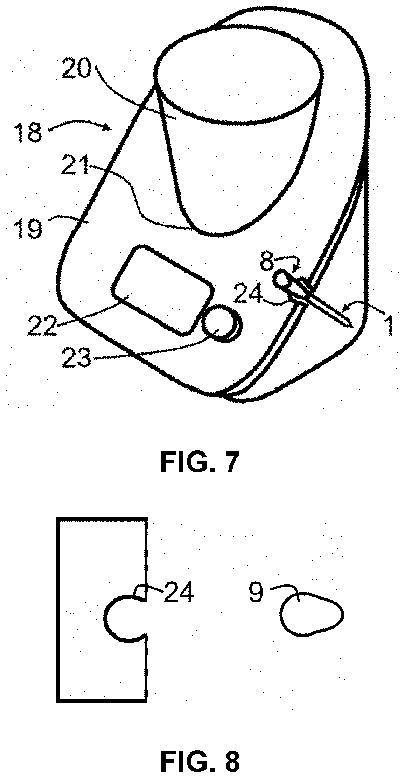

In der Figur 7 wird eine Küchenmaschine 18 gezeigt. Die Küchenmaschine 18 umfasst ein Standteil 19 und ein Gefäß 20. In dem Gefäß 20 kann eine Speise zubereitet werden. Das Gefäß 20 ist in eine Ausnehmung 21 des Standteils 19 eingesetzt. Das Gefäß 20 kann von dem Standteil 19 abgenommen werden. Im Grund des Gefäßes 20 befindet sich ein Misch- und/oder Schneidwerkzeug. Das Misch- und/oder Schneidwerkzeug kann durch einen Motor angetrieben werden, der sich im Standteil 19 befindet. Insbesondere kann das Misch- und/oder Schneidwerkzeug mit Rotationsgeschwindigkeiten von mehr als 5000 Umdrehungen pro Minute, vorzugsweise von mehr als 10000 Umdrehungen pro Minute angetrieben werden.

Die Küchenmaschine 18 kann eine Heizeinrichtung umfassen, mit der der Behälter 20 beheizt werden kann. Die Küchenmaschine 18 kann eine Waage umfassen, mit der das Gewicht einer im Gefäß 20 befindlichen Speise gewogen werden kann. Die Küchenmaschine 18 kann ein Display 22 umfassen, dass ein berührungsempfindliches Display sein kann. Die Küchenmaschine 18 kann dann über das Display 22 bedient werden. Die Küchenmaschine 18 kann ein oder mehrere mechanische Bedienelemente 23 umfassen. Ein Bedienelement 23 kann ein drehbarer Knopf und/oder drückbarer Knopf sein, um die Küchenmaschine 18 bedienen zu können.

Die Küchenmaschine 18 kann eine Halterung 24 für das Speisenthermometer umfassen. Die Halterung 24 kann eine teilkreisförmige Öffnung 24 in einem überstehenden Randbereich der Küchenmaschine 18 sein. Verbreitert sich das Endstück 8 zu seinem freien Ende hin, so kann das Speisenthermometer wie in der Figur 7 gezeigt in die Halterung 24 eingehängt werden. Halterung 24 und/ oder Endstück 8 sind dann vorzugsweise so geformt, dass das Speisenthermometer in immer der gleichen Weise eingehängt wird. Das Endstück 8 kann daher beispielsweise in Aufsicht gesehen wie in der Figur 8 ausschnittsweise gezeigt tropfenförmig sein. Die Öffnung 24 kann an diese Tropfenform angepasst sein. Insbesondere bei dieser Ausgestaltung der Erfindung kann in der Küchenmaschine 18 eine Sendespule 13 vorhanden sein, über die die Batterie des Speisenthermometers aufgeladen werden kann. Kann das Speisenthermometer nur in immer der gleichen Weise eingehängt werden, so kann dadurch verbessert sichergestellt werden, dass eine Sendespule 13 der Küchenmaschine induktiv mit einer Empfängerspule 11 des Speisenthermometers gekoppelt werden kann.

Die Halterung 24 ist so ausgerichtet, dass das Speisenthermometer mithilfe von Schwerkraft in der Halterung 24 gehalten werden kann. Das Speisenthermometer kann wie gezeigt mit dem Untergrund einen Winkel kleiner als 90° einschließen, wenn die zugehörige Oberfläche der Küchenmaschine 18 nicht parallel zum Untergrund verläuft. Das als Griff dienende Endstück 8 des Speisenthermometers kann gegenüber der Oberfläche, die die Halterung 24 umfasst, wie in der Figur 7 gezeigt vorstehen, um besonders leicht ergriffen werden zu können. Dies gilt insbesondere dann, wenn die entsprechende Oberfläche wie in der Figur 7 gezeigt bereits eine relativ zum Untergrund geneigte Fläche ist. Das Speisenthermometer kann im eingehängten Zustand mit dieser geneigten Oberfläche einen rechten Winkel einschließen, um gut erreichbar zu sein.

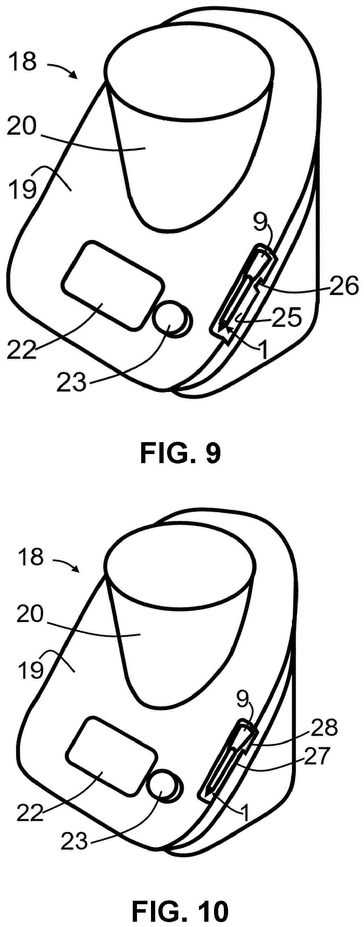

In der Figur 9 wird eine Küchenmaschine 18 mit einer seitlichen Ausnehmung 25 in der geneigten Oberfläche der Küchenmaschine 18 gezeigt. Die Ausnehmung 25 ist so dimensioniert, dass das Speisenthermometer in die Ausnehmung 25 hineingelegt werden kann. Vorzugsweise ist die Ausnehmung 25 seitlich offen, so dass das Speisenthermometer leicht ergriffen werden kann. Ein Steg 26 der Küchenmaschine, der seitlich von der Ausnehmung 25 nach oben absteht, kann vorhanden sein, der das Speisenthermometer vor einem seitlichen Herausfallen schützt. Der Steg 26 ist vorzugsweise wie dargestellt beim Übergangsbereich zwischen der Kappe 9 und dem Vorderteil 1 des Speisenthermometers angeordnet, um eine Einlegerichtung des Speisenthermometers anzuzeigen. Angrenzend an die Stirnseite der Kappe 9 kann in der Küchenmaschine 18 dann eine Sendespule integriert sein, über die die Batterie des Speisenthermometers induktiv geladen werden kann.

Beispielsweise der Steg 26 und/oder Wandbereiche der Ausnehmung 25 können so an die Form des Speisenthermometers angepasst sein, dass das Speisenthermometer nur in einer vorgegebenen Richtung in die Ausnehmung 25 eingelegt werden kann. So kann sichergestellt werden, dass das Speisenthermometer nur so in die Ausnehmung 25 eingelegt werden kann, dass die Batterie des Speisenthermometers dann induktiv geladen wird. Das Speisenthermometer kann eine beispielsweise umlaufende Rille beispielsweise im Bereich der Kappe 9 oder angrenzend an die Kappe 9 aufweisen, in die beispielsweise der Steg 26 und/oder Vorsprünge im Wandbereich der Ausnehmung 25 eingreifen, wenn das Speisenthermometer in die Ausnehmung 25 eingelegt ist. Dies ist eine Möglichkeit, um sicherzustellen, dass das Speisenthermometer nur so in die Ausnehmung 25 eingelegt werden kann, dass die Batterie des Speisenthermometers induktiv geladen wird.

Es kann beispielsweise hinter einem Wandbereich der Ausnehmung 25 ein Permanentmagnet vorhanden sein, durch den das in die Ausnehmung 25 eingelegte Speisenthermometer magnetisch gehalten wird. Auf einen Steg 26 oder ein anderes Haltemittel kann dann problemlos verzichtet werden. Durch den Magneten kann eine Richtung für das Einlegen des Speisenthermometers in die Ausnehmung vorgegeben werden.

Anstelle eines Stegs kann das Speisenthermometer auch durch einen in der Figur 10 gezeigten Wandabschnitt 27 vor einem Herausfallen aus der Ausnehmung geschützt werden. Eine seitliche Öffnung 28 kann in Höhe der Kappe 9 vorhanden sein, um das Herausnehmen des Speisenthermometers zu erleichtern. Es kann sein, dass die seitliche Öffnung 28 aufgrund einer Verbreiterung der Kappe 9 zwingend erforderlich ist, damit das Speisenthermometer in die Ausnehmung eingelegt werden kann. Auch so kann die Richtung festgelegt werden, die für ein Einlegen des Speisenthermometers in die Ausnehmung zwingend zu beachten ist.

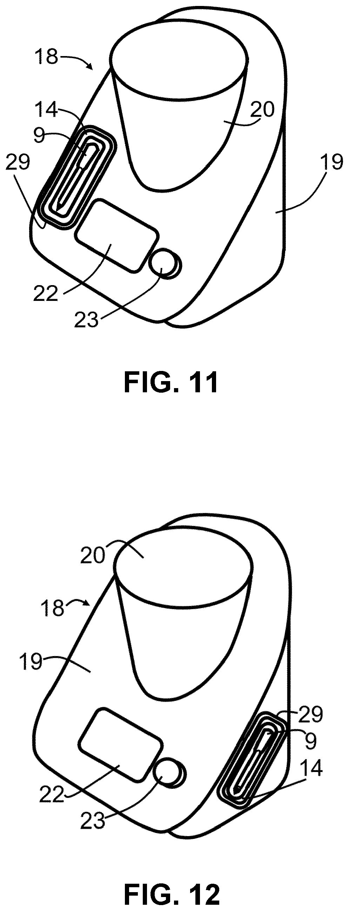

Die Küchenmaschine 18 kann wie in der Figur 11 gezeigt eine Ausnehmung 29 aufweisen, in die die Ladeschale umfassend den Behälter 14 eingesetzt werden kann. Beispielsweise im Grund der Ausnehmung 29 kann eine Sendespule so vorhanden sein, dass dadurch die Batterie der Ladeschale geladen werden kann. Die Ausnehmung 29 kann eine seitliche Öffnung aufweisen, um die Ladeschale leicht aus der Ausnehmung 29 herausnehmen zu können. Der Behälter 14 einer in die Ausnehmung 29 eingesetzten Ladeschale kann gegenüber der benachbarten Oberfläche des Standteils 19 vorstehen, damit die Ladeschale für ein Herausnehmen leicht ergriffen werden kann.

Eine Ausnehmung 29 für die Ladeschale kann alternativ in einer Seitenwand des Standteils 19 der Küchenmaschine 18 vorhanden sein. Dadurch wird die Ladeschale besser vor Verschmutzungen geschützt. Ein Beispiel für eine solche Anordnung wird in der Figur 12 gezeigt.

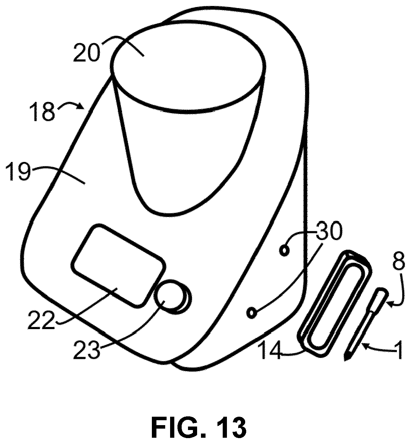

In der Figur 13 wird der Fall einer magnetischen Halterung an einer Seitenwand der Küchenmaschine 18 gezeigt. Die magnetische Halterung umfasst beispielsweise wie dargestellt zwei Permanentmagnete 30. In das Gehäuse 14 der Ladeschale können dazu korrespondierende Permanentmagnete eingelassen sein oder Plättchen aus ferromagnetischem Material, so dass das Gehäuse 14 magnetisch an der Seitenwand der Küchenmaschine 18 gehalten werden kann. Eine Spule kann in der Seitenwand zwischen den beiden Permanentmagneten 30 so angeordnet sein, dass die Batterie der Ladeschale aufgeladen werden kann, wenn die Ladeschale magnetisch gehalten wird. Das Gehäuse 14 besteht dann aus einem nicht metallischen Material wie zum Beispiel Kunststoff, um die induktive Kopplung für ein Aufladen nicht zu behindern. Ist das Speisenthermometer 1, 8 in das Gehäuse 14 der Ladeschale eingelegt, so wird das Speisenthermometer mittelbar durch die magnetische Halterung 30 für ein Aufladen gehalten.

Eine derartige magnetische Halterung kann auch unmittelbar für das Speisenthermometer 1, 8 vorgesehen sein.

## Patentansprüche

1. Speisenthermometer mit einem Temperatursensor (7), mit einer aufladbaren Batterie (6), mit einer Spule (11), durch die die Batterie (6) induktiv aufgeladen werden kann.

2. Speisenthermometer nach dem vorhergehenden Anspruch, **dadurch gekennzeichnet, dass** das Speisenthermometer (1, 8) einen länglichen, flüssigkeitsdichten Behälter (1) mit einer Öffnung an einer Stirnseite umfasst, wobei die Öffnung durch eine Kappe (9) flüssigkeitsdicht verschlossen ist.

3. Speisenthermometer nach dem vorhergehenden Anspruch, **dadurch gekennzeichnet, dass** die Kappe (9) mit dem Behälter (1) stoffschlüssig und/oder kraftschlüssig verbunden ist.

4. Speisenthermometer nach dem vorhergehenden Anspruch, **dadurch gekennzeichnet, dass** die Spule (11) beim Grund der Kappe (9) angeordnet ist.

5. Speisenthermometer nach einem der drei vorhergehenden Ansprüche, **dadurch gekennzeichnet, dass** der Behälter (1) aus Metall besteht und/oder die Kappe (9) aus Kunststoff besteht.

6. Speisenthermometer nach einem der vorhergehenden Ansprüche, **dadurch gekennzeichnet, dass** das Speisenthermometer ein spitzes Ende (3) aufweist und die Batterie (6) und ein Temperatursensor (7) beim spitzen Ende (3) angeordnet ist.

7. Ladegerät für ein Speisenthermometer (1, 8) nach einem der vorhergehenden Ansprüche, mit einer Spule (13) für ein induktives Aufladen des Speisenthermometers (1, 8), **dadurch gekennzeichnet, dass** das Ladegerät eine langgestreckte Aufnahme (14; 25) für ein Aufnehmen und Aufladen des Speisenthermometers (1, 8) umfasst, und/oder eine Halterung (24, 30), durch die das Speisenthermometer (1, 8) für ein Aufladen gehalten werden kann.

8. Ladegerät nach dem vorhergehenden Anspruch, **dadurch gekennzeichnet, dass** die Form des Speisenthermometers (1, 8) so an die Form der Aufnahme (14; 25) angepasst ist, dass das Speisenthermometer (1, 8) nur so von der Aufnahme (14, 25) aufgenommen oder nur so von der Halterung (24, 30) gehalten werden kann, dass das Speisenthermometer (1, 8) aufgeladen werden kann.

9. Ladegerät nach einem der beiden vorhergehenden Ansprüche, **dadurch gekennzeichnet, dass** das Ladegerät eine Ladeschale mit einem langgestreckten Behälter (14) ist.

10. Ladegerät nach dem vorhergehenden Anspruch, **dadurch gekennzeichnet, dass** die Ladeschale eine Spule (13) in einer Stirnseite des langegestreckten Behälters (14) für ein Aufladen des Speisenthermometers (1, 18) umfasst.

11. Ladegerät nach einem der beiden vorhergehenden Ansprüche, **dadurch gekennzeichnet, dass** die Ladeschale eine Batterie (16) für ein Aufladen des Speisethermometers (1,8) umfasst.

12. Ladegerät nach dem vorhergehenden Anspruch, **dadurch gekennzeichnet, dass** die Ladeschale eine Spule (15) für ein Aufladen der Batterie (16) der Ladeschale umfasst.

13. Ladegerät nach dem vorhergehenden Anspruch, **dadurch gekennzeichnet, dass** die Spule (15) im Grund des Behälters (14) der Ladeschale angeordnet ist.

14. Ladegerät nach Anspruch 8, **dadurch gekennzeichnet, dass** das Ladegerät eine Küchenmaschine (18) ist, die ein Standteil (19), ein in das Standteil (19) einsetzbares Gefäß (20), ein Misch- und/oder Schneidwerkzeug und einen Motor als Antrieb für das Misch- und/oder Schneidwerkzeug umfasst.

15. Ladegerät nach dem vorhergehenden Anspruch, **dadurch gekennzeichnet, dass** die Küchenmaschine (18) die Halterung (24, 30) umfasst und/oder eine Ausnehmung (25, 29) für eine Ladeschale des Speisenthermometers (1, 8) oder für das Speisenthermometer (1, 8).
